Europäisches Patentamt

European Patent Office

Office européen des brevets

(19)

(11) **EP 0 603 054 B1**

(12) **FASCICULE DE BREVET EUROPEEN**

(45) Date de publication et mention
de la délivrance du brevet:
**08.07.1998   Bulletin 1998/28**

(51) Int Cl.⁶: **H04L 12/56**

(21) Numéro de dépôt: **93403014.9**

(22) Date de dépôt: **14.12.1993**

(54) **Procédé de génération de gigue cellules dans un signal incident transmis en mode ATM et dispositif de mise en oeuvre**

Verfahren und Vorrichtung zur Erzeugung Zelljitters von eines ATM-Eingangssignals

Method and device to generate cell jitter of an incoming ATM signal

(84) Etats contractants désignés:
**DE GB**

(30) Priorité: **16.12.1992  FR 9215176**

(43) Date de publication de la demande:
**22.06.1994   Bulletin 1994/25**

(73) Titulaire: **FRANCE TELECOM**
**75015 Paris (FR)**

(72) Inventeurs:
• **Wipliez, Christian**
  **F-75116 Paris (FR)**
• **Le Hir, Jean-Pierre**
  **F-75116 Paris (FR)**

(74) Mandataire: **Ballot, Paul Denis Jacques et al**
**Cabinet Ballot-Schmit,**
**7, rue Le Sueur**
**75116 Paris (FR)**

(56) Documents cités:
**EP-A- 0 381 275      EP-A- 0 422 549**
**EP-A- 0 438 009**

**Description**

L'invention concerne un procédé de génération de gigue cellules dans un signal incident transmis en mode ATM et un dispositif de mise en oeuvre.

L'invention permet de simuler les incidences dues à un phénomène de gigue pouvant survenir lors de la traversée de noeuds de commutations sur un réseau ATM.

On rappelle à ce propos qu'un réseau ATM (Asynchronous Transfert Mode) permet la transmission d'informations numériques ayant des débits variés et pouvant être importants, ces débits pouvant en effet aller jusqu'à 155Mbit/s.

La transmission mode ATM se fait par transfert de blocs d'informations de longueur constante. La quantité élémentaire d'informations transmises est de 48 octets; le bloc d'informations transmis en ATM est dénommé cellule et est identifié par une étiquette de 5 octets appelée également en-tête. La longueur totale d'une cellule est donc de 53 octets.

On rappelle aussi que deux autres grandes classes de modes de transmissions numériques existent également à l'heure actuelle. Il s'agit du mode circuit à 64 kbit/s et du mode paquet utilisé par exemple par le réseau Transpac

Une communication en mode ATM consiste à envoyer des cellules dont l'identité est connue, à partir d'un terminal ATM vers un ou plusieurs autres terminaux, éventuellement en recevoir, ceci après échange de signalisation. Cette communication se fait au travers d'un réseau constitué d'un ou plusieurs noeuds de commutations propre à l'ATM susceptibles d'être saturés. C'est pourquoi on prévoit des files d'attente à chaque noeud.

Le temps mis par une cellule pour traverser le réseau varie en fonction du nombre de noeuds traversés et la charge de ceux-ci. Cette variation du temps de traversée du réseau se traduit par un écart entre les cellules à l'arrivée différent de l'écart origine, c'est ce que l'on entend par gigue, on parlera dans la suite de gigue cellule ou de cellules giguées.

En mode ATM, un terminal raccordé au réseau voit arriver un flux de cellules sur le réseau ATM auquel il est raccordé, issues d'une ou plusieurs sources d'émission. Ce flux est constitué notamment de cellules destinées à ce terminal. Le terminal est apte à sélectionner les cellules qui lui sont destinées par lecture de leur entête. On qualifiera ces cellules dans la suite, de cellules relatives à une même communication.

La gigue a donc pour effet de modifier la distribution temporelle des cellules émises au départ d'un terminal d'émission. A l'arrivée dans le terminal de réception, l'ordre des cellules est respecté mais n'a plus la même distribution. La gigue induit par exemple une rafale de cellules concernant le terminal de réception suivi d'un nombre X de cellules étrangères destinées à d'autres terminaux.

La gigue a des incidences sur le dimensionnement des terminaux ATM.

On ne connaît pas à ce jour de système qui permette de connaître les incidences réelles de ce phénomène de gigue.

Le document EP-A-0 438 009 est cité en tant qu'arrière plan technologique.

Pour résoudre ce problème, le déposant a eu l'idée de simuler ce phénomène afin d'obtenir un signal présentant ce défaut de transmission et de l'utiliser pour tester des terminaux ATM.

Il n'est pas connu non plus à ce jour de système qui permette d'obtenir la simulation de ce phénomène provoqué par la saturation d'un réseau ATM et, par conséquent, de générer une gigue sur un signal incident transmis en mode ATM.

La présente invention a plus particulièrement pour objet un procédé de génération de gigue cellules dans un signal incident émis en mode ATM, principalement caractérisé en ce qu'il comprend les étapes suivantes :

- mémoriser un modèle de consigne de gigue préétabli,
- Calculer et mémoriser l'écart entre les cellules incidentes relatives à une même communication,
- modifier ou non l'écart entre cellules de cette même communication selon la consigne.

La modification consiste à enlever ou à insérer un nombre de cellules donné pour la consigne entre les cellules d'une même communication. Selon l'autre aspect de l'invention, la détermination de l'écart entre cellules consiste à l'arrivée de chaque cellule :

- à identifier la cellule par son en-tête; et
- à compter après identification, le nombre de cellules séparant deux cellules relatives à une même communication.

L'identification d'une cellule consiste :

- au préalable, à enregistrer l'en-tête d'une cellule concernant la communication affectée par la gigue;
- à comparer les en-têtes des cellules incidentes à cet en-tête;
- à stocker après comptage l'écart entre les cellules de manière à le modifier ou non selon la consigne.

La présente invention a également pour objet un dispositif de génération de gigue cellules dans un signal incident transmis en mode ATM , principalement caractérisé en ce qu'il comprend :

- des moyens de mémorisation d'une consigne de gigue,
- des moyens de mesure de l'écart entre cellules relatives à une même communication,
- des moyens d'aiguillage des cellules incidentes selon qu'elles sont relatives à la même communication ou non,

- des moyens de commande permettant de modifier ou non l'écart entre cellule relatives à une même communication.

Selon un autre aspect de l'invention les moyens de mesure de l'écart comportent :

- un détecteur d'en-tête des cellules;
- un compteur d'écart entre-cellules;
- un registre de stockage pour stocker la valeur de cet écart.

Selon un autre aspect de l'invention, les moyens d'aiguillage comportent un premier registre de stockage de cellules relatives à la même communication et un deuxième registre de stockage de cellules autres.

Selon un autre aspect de l'invention les moyens de commande comportent une unité arithmétique et logique et un séquenceur.

Selon un autre aspect de l'invention les moyens de mémorisation comportent une mémoire à lecture et écriture de type RAM.

D'autres particularités et avantages de l'invention apparaîtront à la lecture de la description qui est faite à titre illustratif et non limitatif et en regard du dessin sur lequel :

- la figure 1, représente un schéma général du dispositif conforme à l'invention;
- la figure 2, représente un schéma plus détaillé de réalisation du dispositif;
- la figure 3, représente un diagramme illustrant le stockage des cellules et le comptage;
- la figure 4, représente le schéma du déroulement de la génération de gigue selon un exemple de réalisation pratique.

Dans toute la suite de la description on parlera de cellules giguées que l'on notera G pour les cellules relatives à une même communication. Les cellules G seront par conséquent les cellules de la communication affectée par la gigue introduite par le procédé objet de l'invention. Les cellules autres seront notées NG pour indiquer qu'il s'agit de cellules appartenant à des communications non affectées par la gigue.

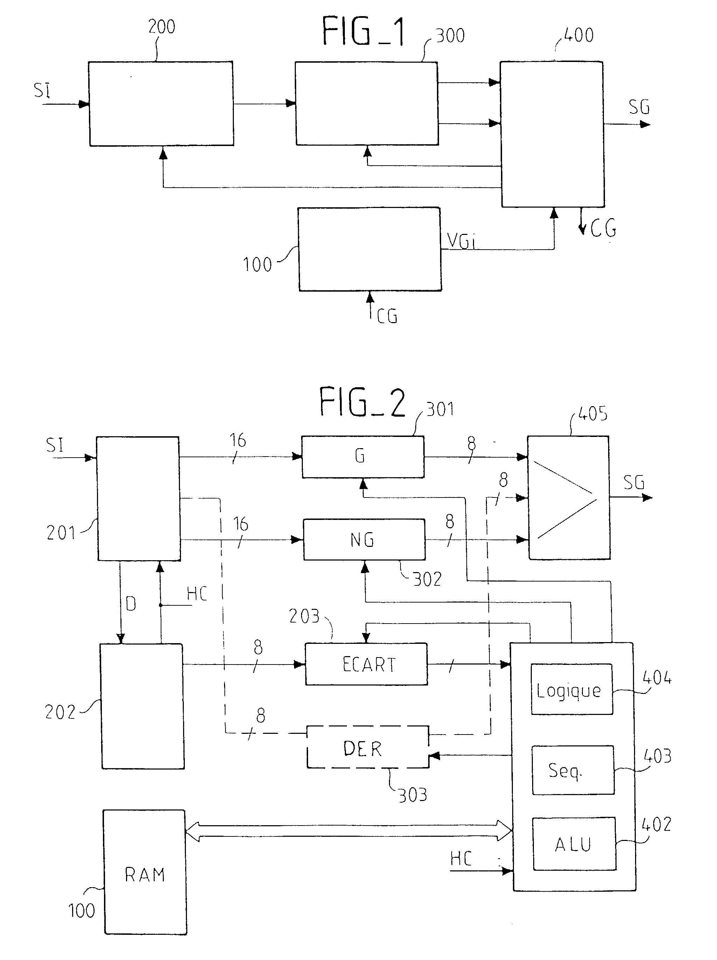

Le schéma général de la figure 1, illustre un dispositif conforme à l'invention.

Ce dispositif comprend une unité de mémorisation qui permet de programmer une consigne de gigue CG préalablement établie à partir soit de mesures effectuées sur une liaison de transmission en mode ATM soit à partir d'une loi mathématique donnée reflétant au mieux le phénomène de gigue sur une transmission en mode ATM.

Une unité de commande 400 est prévue pour commander la lecture de la consigne dans l'unité 100 et commander la génération d'un signal SG présentant des écarts variables entre cellules ou non selon le signal de la consigne.

Le flux de sortie SG du dispositif est identique au flux d'arrivée SI lorsque l'écart entre cellules reste le même en entrée qu'en sortie. Le flux de sortie est différent lorsque l'écart entre cellules a été modifié par rapport à l'écart du flux d'entrée.

L'écart entre cellules du flux d'arrivée SI est mesuré par une unité 200.

Après mesure de cet écart, les cellules G relatives à la communication concernée sont séparées des cellules autres NG. Cette séparation ou aiguillage est réalisée par l'unité 300.

L'unité de commande 400 permet de piloter l'ensemble des opérations réalisées par les unités 100, 200 et 300 pour ensuite modifier l'écart entre cellules de la communication concernée en réinsérant le même nombre de cellules NG (des communications autres) entre deux cellules G ou un nombre différent de celui-ci.

Un exemple de réalisation non limitatif va être décrit dans la suite à partir de la figure 2. Selon cet exemple, l'unité 100 est réalisée par une mémoire à lecture et écriture de type RAM. Cette mémoire est donc chargée par un modèle de consigne CG désiré et modifiable. L'unité 200 est réalisée par un circuit 201 de détection des entêtes des cellules permettant d'identifier les cellules G relatives à la communication concernée et les autres cellules NG.

Cette unité 200 comprend également, associé à ce circuit 201, un circuit 202 de comptage d'écart cellules et une file d'attente 203 réalisée par piles de stockage de type FIFO afin de stocker les écarts obtenus à la sortie du compteur 202.

L'unité d'aiguillage 300 comporte, selon cet exemple de réalisation, une file d'attente 301 réalisée par piles de stockage de type pile FIFO permettant de stocker les cellules G relatives à la communication affectée, identifiées par le circuit 201.

Cette unité 300 comporte également une file d'attente 302 réalisée par piles de stockage de type pile FIFO permettant de stocker les cellules NG de communications autres.

L'unité de commande 400 permettant de mettre en oeuvre le procédé comporte un multiplexeur 405, une unité arithmétique et logique 402, un séquenceur 403 et une logique de commande 404 de manière à gérer l'adressage des piles de stockage, le comptage des écarts et, l'insertion ou la retenue de cellules entre les cellules de la communication affecté par la gigue.

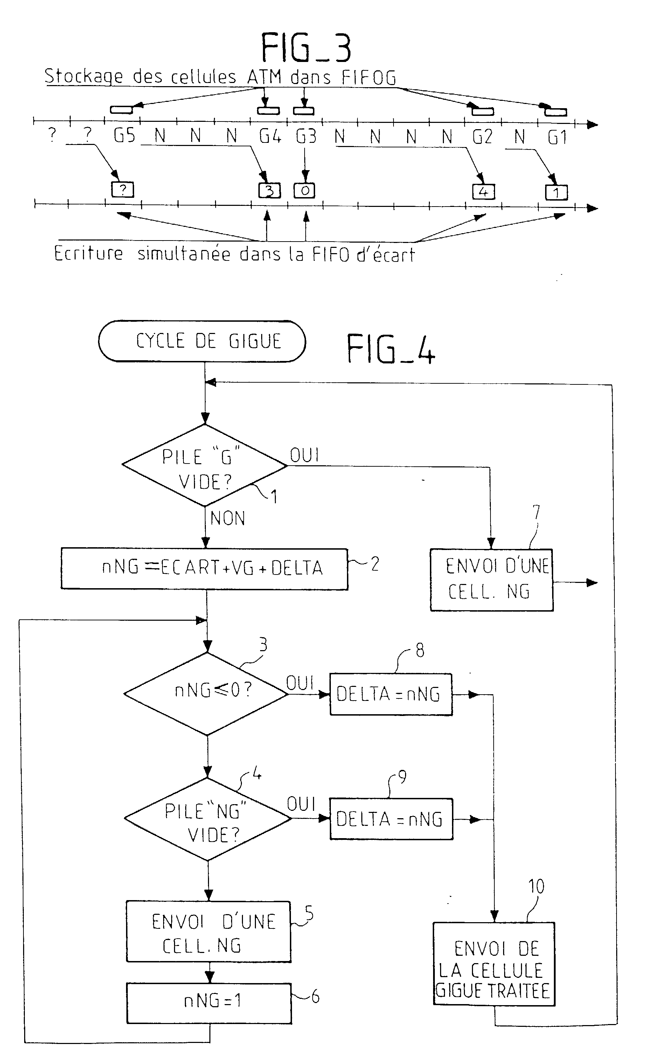

Le déroulement de l'ensemble des opérations pilotées par l'unité centrale au moyen de l'unité arithmétique et logique 402, du séquenceur 403 et de la logique de commande 404 pour obtenir un cycle de gigue est illustré par l'organigramme de la figure 4. Tous ces ensembles sont synchronisés sur un signal d'horloge Hc externe, centré sur l'en-tête des cellules et correspondant au rythme d'arrivée des cellules.

Le détecteur d'en-tête 201 est synchronisé sur l'horloge Hc externe correspondant au rythme d'arrivée des cellules. Ce circuit est par exemple réalisé par un circuit programmable Xilinx dans lequel l'en-tête des cellules de la communication affectée a été programmé. Ce circuit réalise la comparaison des en-têtes des cellules incidentes au rythme de leur arrivée, à l'en-tête programmé et, transmet la cellule à l'ensemble 301 ou 302 selon les résultats de la comparaison.

Le compteur 202 est activé par un signal de détection D de cellules délivré par le circuit 201.

Le stockage des cellules dans la pile FIFO 301 se fait simultanément au stockage dans la pile 203 de l'écart mesuré associé à chaque cellule tel que cela a été illustré par l'exemple donné sur le diagramme de la figure 3.

Sur ce diagramme l'écart entre les cellules G1 et G2 est égal à 1, cette valeur d'écart "1" est affectée à la cellule G1. L'écart entre G2 et G3 est 4, 4 est affecté à la cellule G3. L'écart entre G3 et G4 est 0, 0 est affecté à G3.

La consigne programmée consiste par conséquent à mémoriser des mots indiquant des valeurs d'écart obéissant à une loi de programmation donnée.

Pour obtenir une cellule de plus entre deux cellules G la consigne sera égale à .+1. Pour obtenir une cellule de moins, la consigne sera égale à -1.

Pour n'obtenir aucun changement, la consigne sera égale à O.

L'unité de séquencement commande la lecture. d'une valeur de consigne $VG_i$ puis $VG_{i+1}$ pour mettre en oeuvre le cycle de génération de gigue sur la cellule $G_i$ puis $G_{i+1}$.

Ainsi, pour giguer les cellules G, le dispositif va insérer un nombre variable de cellules NG entre deux cellules G.

On va dans la suite, désigner par :

VG : la valeur gigue (ou consigne);
ECART : l'écart séparant deux cellules G, il représente donc le nombre de cellules non giguées dans le flux d'entrée;
DELTA : le reliquat de gigue à terminer sur la cellule suivante dans le cas d'une impossibilité de réalisation du calcul;
nNG : le nombre de cellules non giguées NG à envoyer avant de sortir la cellule giguée G faisant l'objet du calcul.

L'unité arithmétique réalise le calcul suivant:

$$nNG = ECART + VG + DELTA$$

la valeur DELTA représente une retenue dans le calcul lorsque nNG est négatif.

Selon un exemple de réalisation pratique, la valeur maximum du paramètre ECART est fixée à 4095 (cellules).

Pour traiter une cellule $G_i$, on lit les paramètres ECART et $VG_i$ concernant cette cellule, ainsi que le paramètre DELTA résultant du calcul précédent.

Si nNG > 0, la gigue est positive, le déroulement du cycle pour la cellule peut commencer. Les moyens de commande séquencent la sortie d'un nombre de cellules NG correspondant au nombre nNG puis la sortie de la cellule $G_i$.

Si nNG < 0, il y a impossibilité. On force alors DELTA à la valeur nNG et la cellule $G_i$ est envoyée tout de suite.

Pour éviter d'avoir à lire une pile vide, on prévoit de réaliser un test sur la pile de cellules NG dans la boucle de vidage du nombre nNG de cellules. Ce test se déroule immédiatement après l'envoi d'une cellule NG. Dans le cas ou la pile NG est vide, on envoie la cellule giguée "en avance" et le nombre de cellules NG restant à sortir est reporté dans la valeur DELTA.

L'ensemble des étapes 1 à 10 mentionnées sur la figure 4, correspondent aux différentes opérations effectuées pour un cycle de gigue et qui viennent d'être détaillées.

On va maintenant donner, à titre d'exemple, des détails de réalisation pratique.

On a choisi pour le circuit 100, une RAM statique de 32k x 16 permettant de mémoriser des valeurs sur 16 bits, soit + 32767 à - 32768. Le cycle recommence identique à lui-même toutes les 32768 cellules giguées.

L'unité arithmétique et logique 402 travaille sur 16 bits et forme, avec le séquenceur 403, une unité de séquencement des opérations en synchronisme avec le signal Hc.

Les fonctions des unités 201 et 202 sont intégrées dans un circuit logique de type FPGA (Field Programmable Gate Array).

Les piles de stockage 301, 302 ont une capacité de 256k x 8, car on a fixé l'écart maximum entre deux cellules G égal à 4096 cellules. Chaque pile doit avoir au moins une taille de 53 x 4096 octets.

Pour avoir cette capacité, les piles sont constituées de RAM statiques associées à une logique classique en soi 404 qui permet de gérer les lectures et écritures de ces mémoires.

On peut écrire dans ces piles un octet au rythme de l'horloge de base soit 19,44MHz et simultanément lire un octet. Le temps d'accès des mémoires actuelles étant limité on a choisi la structure suivante pour l'écriture et la lecture :

En effet, la longueur impaire d'une cellule ATM gêne la gestion par paire d'octets au rythme de 155 MBits/s. Pour gérer de manière plus rapide des écritures en mémoire, d'ordinaire on travaille par paire de valeurs. Par exemple si on veut stocker des octets en mémoire de 8 bits à la limite du temps d'accès de ces mémoires, il suffit de mettre deux octets en parallèle dans des mémoires 16 bits. On travaille alors à un rythme deux fois plus lent. Par contre ceci est impossible dans cette réalisation.

Ainsi, pour résoudre ce problème, on considère un flux impair d'octets. On décompose ce flux en trois flux différents:

- le flux des octets pairs dans lequel sont rangés les octets de rang 0,2, ..., 2i, ..., etc,.
- le flux des octets impairs qui comporte les octets 1, 3, 5, 2 i+1), etc,
- le flux des octets derniers (DER).

Cette décomposition permet d'obtenir 2 flux (pair et impair) dont le nombre d'éléments est identique et de plus, ce nombre est pair. Le dernier de chaque suite est stocké dans une pile de type FIFO référencée 303. De cette manière, on peut gérer des écritures lectures par paire et traiter le dernier en un seul cycle avec une pile FIFO de capacité déterminée mais de temps d'accès très rapide, la capacité de la FIFO dépend du nombre d'octets que l'on veut stocker en même temps dans la RAM. Si cette RAM comporte 2 koctets et si la suite impaire est égale à (2N + 1) octets, la FIFO doit avoir une capacité de $\frac{2^{k-1}}{N}$ mots de 16 bits.

Les octets pairs et impairs 0 et 1 sont écrits en même temps puis au tour des octets 2 et 3 etc. Quand le dernier arrive, on l'écrit dans la FIFO DER 303 réservée au dernier octet de chaque suite.

Pour la lecture on adopte le même principe.

On a donc réalisé un système simple qui permet d'écrire et de lire toute suite impaire d'octets par paire. Ce qui permet en plus d'utiliser l'indicateur de file vide de cette pile FIFO comme indicateur général pour cet ensemble de stockage.

## Revendications

1. Procédé de génération de gigue cellules dans un signal incident transmis en mode ATM, caractérisé en ce qu'il comprend les étapes suivantes :

    - mémoriser (100) un modèle de consigne de gigue préétabli,
    - déterminer l'écart (200) entre les cellules incidentes relatives à une même communication,
    - modifier ou non l'écart entre cellules (400) de cette même communication selon la consigne, cette

    modification consistant à enlever ou à insérer un nombre de cellules donné par la consigne entre les cellules d'une même communication, ce nombre étant obtenu par la relation:

    $$nNG = ECART + VG + DELTA$$

    ou VG représente la valeur de consigne, ECART étant l'écart séparant deux cellules, et DELTA étant un reliquat de gigue.

2. Procédé de génération de gigue selon la revendication 1, caractérisé en ce que la détermination de l'écart entre cellules consiste à l'arrivée de chaque cellule :

    - à identifier (201) la cellule par son en-tête;
    - à compter (202) après identification, le nombre de cellules séparant deux cellules relatives à une même communication.

3. Procédé de génération de gigue selon la revendication 2, caractérisé en ce que l'identification d'une cellule consiste :

    - au préalable, à enregistrer l'en-tête d'une cellule (301) concernant la communication affectée par la gigue;
    - à comparer (201) les en-têtes des cellules incidentes à cet en-tête;
    - à stocker (203) après comptage l'écart entre les cellules de manière à le modifier ou non selon la consigne.

4. Dispositif de génération de gigue cellules dans un signal incident transmis en mode ATM, caractérisé en ce qu'il comprend :

    - des moyens de mémorisation (100) d'une consigne de gigue, préalablement établie;
    - des moyens (200) de mesure de l'écart entre cellules relatives à une même communication,
    - des moyens (300) d'aiguillage des cellules incidentes selon qu'elles sont relatives à la même communication ou non,
    - des moyens de commande (400) permettant de modifier ou non l'écart entre cellules relatives à une même communication selon la consigne,

    cette modification consistant à enlever ou à insérer un nombre de cellules donné par la consigne entre les cellules d'une même communication, ce nombre étant obtenu par la relation:

    $$nNG = ECART + VG + DELTA$$

    ou VG représente la valeur de consigne, ECART étant l'écart séparant deux cellules, et DELTA étant un reliquat de gigue.

5. Dispositif de génération de gigue selon la revendication 4, caractérisé en ce que les moyens de mesure de l'écart (200) comportent :

    - un détecteur d'en-tête des cellules (201);
    - un compteur d'écart entre cellules (202);
    - un registre de stockage pour stocker la valeur de cet écart (203).

6. Dispositif de génération de gigue selon la revendication 4 ou 5, caractérisé en ce que les moyens d'aiguillage (400) comportent un premier registre de stockage (301) de cellules relatives à la même communication et un deuxième registre de stockage (302) de cellules autres.

7. Dispositif de génération de gigue selon la revendication 6, caractérisé en ce qu'il comporte un registre de stockage (203) de l'écart entre cellules relatives à la même communication.

8. Dispositif de génération de gigue selon l'une quelconque des revendications 4 à 7, caractérisé en ce que les moyens d'aiguillage comportent en outre un registre de stockage (303) permettant de réaliser des écritures et lectures d'octets par paire, le dernier octet de chaque cellule étant stocké dans ce registre.

9. Dispositif de génération de gigue selon l'une quelconque des revendications 5 à 8, caractérisé en ce que les moyens de commande (400) comportent une unité arithmétique, un séquenceur et une logique d'adressage des registres.

10. Dispositif de génération de gigue selon l'une quelconque des revendications 4 à 9, caractérisé en ce que les moyens de mémorisation comportent une mémoire (100) à lecture et écriture de type RAM statique.

11. Dispositif de génération de gigue selon l'une quelconque des revendications 5 à 10, caractérisé en ce que les registres de stockage (301, 302) sont réalisés par des mémoires RAM statiques.

**Patentansprüche**

1. Verfahren zur Erzeugung von Zelljitter in einem ankommenden ATM-Signal, **dadurch gekennzeichnet,** daß es die folgenden Schritte enthält:

   - Speichern (100) eines im voraus hergestellten Jitterbezugsmodells,

   - Bestimmen des Abstands (200) zwischen den ankommenden Zellen in bezug auf ein und dieselbe Kommunikation,

   - Abändern des Abstands zwischen den Zellen (400) dieser selben Kommunikation gemäß dem Bezug oder nicht, wobei diese Abänderung darin besteht, eine Anzahl Zellen, die durch den Bezug gegeben sind, zwischen den Zellen derselben Kombination zu entfernen oder einzufügen, wobei diese Anzahl durch die

Beziehung erhalten wird:

$$nNG = ECART + V + DELTA$$

wo VG den Bezugswert darstellt, ECART der zwei Zellen trennende Abstand ist und DELTA ein Jitterrest ist.

2. Verfahren zur Erzeugung von Jitter gemäß Anspruch 1, **dadurch gekennzeichnet,** daß die Bestimmung des Abstands zwischen Zellen beim Ankommen jeder Zelle darin besteht:

   - Erkennen (201) der Zelle durch ihren Kopf;

   - Zählen (202) der Anzahl von Zellen nach der Identifizierung, die zwei Zellen in bezug auf ein und dieselbe Kommunikation trennen.

3. Verfahren zur Erzeugung von Jitter gemäß Anspruch 2, **dadurch gekennzeichnet**, daß die Erkennung einer Zelle darin besteht:

   - im voraus den Kopf einer Zelle (301) aufzuzeichnen, die die durch den Jitter beeinflußte Kommunikation betrifft;

   - die Köpfe der mit diesem Kopf ankommenden Zellen zu vergleichen (201);

   - nach dem Zählen den Abstand zwischen den Zellen derart zu speichern, daß er gemäß dem Bezug geändert wird oder nicht.

4. Vorrichtung zur Erzeugung von Zelljitter in einem ankommenden ATM-Signal, **dadurch gekennzeichnet**, daß sie umfaßt:

   - Speichereinrichtungen (100) für einen im voraus hergestellten Jitterbezug;

   - Meßeinrichtungen (200) für den Abstand zwischen den Zellen in bezug auf dieelbe Kommunikation,

   - eine Weichensteuereinrichtung (300) für die ankommenden Zellen danach, ob sie sich auf dieselbe Kommunikation beziehen oder nicht,

   - eine Steuereinrichtung (400), die erlaubt, den Abstand zwischen Zellen in bezug auf dieselbe Kommunikation gemäß dem Bezug zu ändern oder nicht,

   - Abändern des Abstands zwischen den Zellen (400) dieser selben Kommunikation gemäß dem Bezug oder nicht, wobei diese Abänderung darin besteht, eine Anzahl Zellen, die durch den Bezug gegeben sind, zwischen den Zellen derselben Kombination zu entfernen oder einzufügen, wobei diese Anzahl durch die Beziehung erhalten wird:

$$nNG = ECART + V + DELTA$$

wo VG den Bezugswert darstellt, ECART der zwei Zellen trennende Abstand ist und DELTA ein Jitterrest ist.

5. Vorrichtung zur Erzeugung von Jitter gemäß Anspruch 4, **dadurch gekennzeichnet**, daß die Meßeinrichtung (200) für den Abstand umfaßt:

- eine Bestimmungseinrichtung für den Kopf der Zellen (201);

- einen Zähler für den Abstand zwischen den Zellen (202);

- ein Speicherregister, um den Wert dieses Abstands (203) zu speichern.

6. Vorrichtung zur Erzeugung von Jitter gemäß Anspruch 4 oder 5, **dadurch gekennzeichnet,** daß die Steuereinrichtung (400) ein erstes Speicherregister (301) für Zellen in bezug auf dieselbe Kommunikation und ein zweites Speicherregister (302) für andere Zellen umfaßt.

7. Vorrichtung zur Erzeugung von Jitter nach Anspruch 6, **dadurch gekennzeichnet,** daß sie ein Speicherregister (203) für den Abstand zwischen Zellen in bezug auf dieselbe Kommunikation umfaßt.

8. Vorrichtung zur Erzeugung von Jitter gemäß einem der Ansprüche 4 bis 7, **dadurch gekennzeichnet**, daß die Weichensteuereinrichtung ferner ein Speicherregister (303) umfaßt, das erlaubt, paarweises Schreiben und Lesen von Oktetten auszuführen, wobei das letzte Oktett jeder Zelle in diesem Register gespeichert wird.

9. Vorrichtung zur Erzeugung von Jitter gemäß einem der Ansprüche 5 bis 8, **dadurch gekennzeichnet**, daß die Steuereinrichtung (400) eine arithmetische Einheit, eine Ablaufsteuerungseinrichtung und eine Adressierungslogik für die Register umfaßt.

10. Vorrichtung zur Erzeugung von Jitter gemäß einem der Ansprüche 4 bis 9, **dadurch gekennzeichnet**, daß die Speichereinrichtung einen Lese- und Schreibspeicher (100) vom Typ eines statischen Speichers mit wahlfreiem Zugriff RAM umfaßt.

11. Vorrichtung zur Erzeugung von Jitter gemäß einem der Ansprüche 5 bis 10, **dadurch gekennzeichnet**, daß die Speicherregister (301, 302) durch statische Speicher mit wahlfreiem Zugriff RAM ausgeführt sind.

**Claims**

1. A method of generating cell jitter in an incident signal transmitted in ATM mode, characterised in that it consists in the following steps :

- storing (100) a pre-established jitter reference model,
- determining the delay (200) between the incident cells relating to a same call,
- modifying or not the delay between cells (400) of this same call depending on the reference, this modification consisting in removing or inserting, as determined by the reference, a number of cells between the cells of a same call, this number being obtained by the relationship :

$$nNG = ECART + VG + DELTA$$

where VG represents the reference value, ECART is the delay separating two cells and DELTA is a residual jitter.

2. A method of generating jitter as claimed in claim 1, characterised in that the delay between cells is determined on the arrival of each cell by :

- identifying (201) the cell by its header;
- counting (202), after identification, the number of cells separating two cells relating to a same call.

3. Method of generating jitter as claimed in claim 2, characterised in that a cell is identified by :

- firstly saving the header of a cell (301) relating to the call affected by the jitter;
- comparing (201) the headers of the incident cells of this header;
- after counting, storing (203) the delay between the cells so as to modify it or not depending on the reference.

4. A device for generating cell jitter in an incident signal transmitted in ATM mode, characterised in that it comprises :

- means for memorising (100) a jitter reference established beforehand;

- means (200) for measuring the delay between cells relating to a same call,
- means (300) for switching incident cells depending on whether they relate to the same call or not,
- control means (400) enabling the delay between cells relating to a same call to be modified or not depending on the reference,

this modification consisting in removing or inserting a number of cells indicated by the reference between the cells of a same call, this number being obtained by the relationship :

$$nNG = ECART + VG + DELTA$$

where VG represents the reference value, ECART is the delay separating two cells and DELTA is a jitter residue.

5. A device for generating jitter as claimed in claim 4, characterised in that the delay measuring means (200) comprise :

- a cell header detector (201);
- an inter-cell delay counter (202);
- a storage register for storing the value of this delay (203).

6. A device for generating jitter as claimed in claim 4 or 5, characterised in that switching means (400) has a first storage register (301) for cells relating to a same call and a second register for storing (302) other cells.

7. A device for generating jitter as claimed in claim 6, characterised it hat it has a register for storing (203) the delay between cells relating to a same call.

8. A device for generating jitter as claimed in any one of claims 4 to 7, characterised in that the switching means additionally have a storage register (303) which allows octets to be written and read by pairs, the final octet of each cell being stored in this register.

9. A device for generating jitter as claimed in any one of claims 5 to 8, characterised in that the control means (400) have an arithmetic unit, a sequencer and an addressing logic for the registers.

10. A device for generating jitter as claimed in any one of claims 4 to 9, characterised in that the memory means comprise a read and write memory (100) of the static RAM type.

11. A device for generating jitter as claimed in any one of claims 5 to 10, characterised in that the storage registers (301, 302) are static RAM memories.

# FIG_1

# FIG_2

# FIG_3

Stockage des cellules ATM dans FIFOG

Ecriture simultanée dans la FIFO d'écart

# FIG_4